# FASCICULE DE BREVET EUROPEEN

(11) **EP 0 692 919 B1**
(45) Date de publication et mention de la délivrance du brevet: **14.12.2005**
(21) Numéro de dépôt: 95401628.3
(22) Date de dépôt: 06.07.1995
(51) Int. Cl.: H04Q 7/30

(54) **Trame montante à l'interface transcodeur-station de base dans un reseau cellulaire de radiocommunications avec des mobiles**
Aufwärtsrahmen an der Transcoder-Basisstation-Schnittstelle in einem mobilen zellularen Funkübertragungsnetzwerk
Uplink-frame at the transcoder-base-station interface in a mobile cellular radio communication network

(30) Priorité: 11.07.1994 FR 9408544
(43) Date de publication de la demande: 17.01.1996
(60) Demande divisionnaire: 05109608.9
(73) Titulaire: Alcatel, 75008 Paris (FR)
(72) Inventeur: Dupuy, Pierre, F-75017 Paris (FR); Cruchant, Laurent, F-92500 Rueil Malmaison (FR)
(74) Mandataire: Lamoureux, Bernard

(56) Documents cités:
- EP-A- 0 600 773
- FR-A- 2 700 088
- MOULY ET AL. 'The GSM System for Mobile Communications' 1992 , EUROPE MEDIA , LASSAY-LES CHATEAUX FR * page 162, alinéa 3.3.2.2 *

## Description

La présente invention concerne de manière générale une trame montante à l'interface transcodeur-station de base dans un réseau cellulaire de radiocommunications avec des mobiles. La trame montante est transmise par une station de base vers un transcodeur dans un tel réseau, et l'invention concerne également une station de base destinée à produire une telle trame.

La limitation des largeurs de bande de fréquence disponibles en transmission radioélectrique dans les réseaux dits mobiles impose un traitement, ou codage, des signaux de parole de sorte que le débit numérique de tels signaux soit relativement faible. Dans un réseau dit fixe, tel que Réseau Téléphonique Commuté, le débit dans un canal établi d'un multiplex MIC est typiquement égal à 64 kbit/s. En vue de réduire ce débit à un débit inférieur, le réseau mobile G.S.M. (Global System For Mobile Communications) prévoit qu'un signal de parole est traité notamment par un codeur de parole de type RPE-LTP (Regular Pulse Excitation, Long Term Prediction en terminologie anglosaxonne) en un segment traité de 260 échantillons associé à 20 ms de parole et définissant un débit de 13 kbit/s. Un canal de parole reçu à un débit de 64 kbit/s en provenance du Réseau Téléphonique Commuté est donc traité par le réseau GSM pour fournir un canal de parole à un débit de 13 kbit/s, et, inversement, un canal de parole à un débit de 13 kbit/s reçu d'une station mobile est traité dans le réseau mobile GSM pour fournir un canal à 64 kbit/s qui est véhiculé dans le Reseau Téléphonique Commuté. Dans un tel réseau GSM, l'entité fonctionnelle qui assure le traitement de canaux de parole à 64 kbit/s en des canaux à 13 kbit/s, et inversement, est un transcodeur (TRAU en terminologie anglosaxonne pour Transcoder Rate Adaptation Unit).

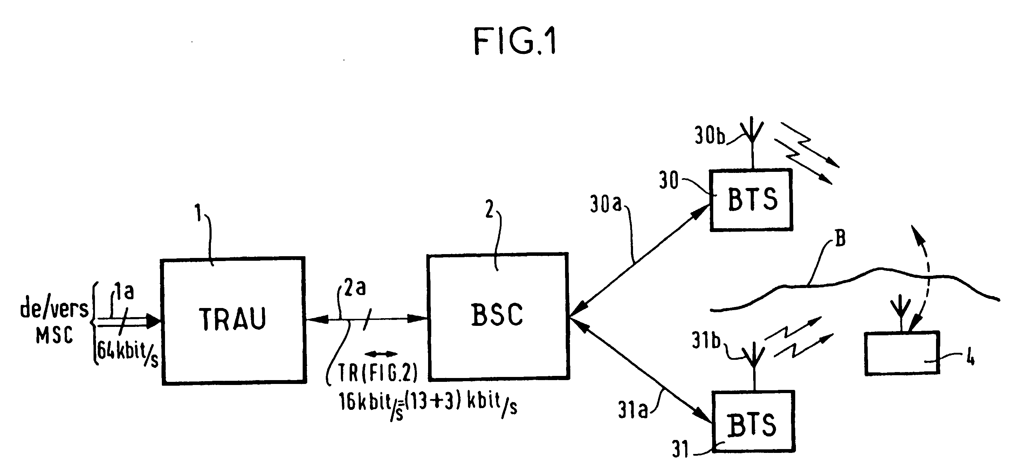

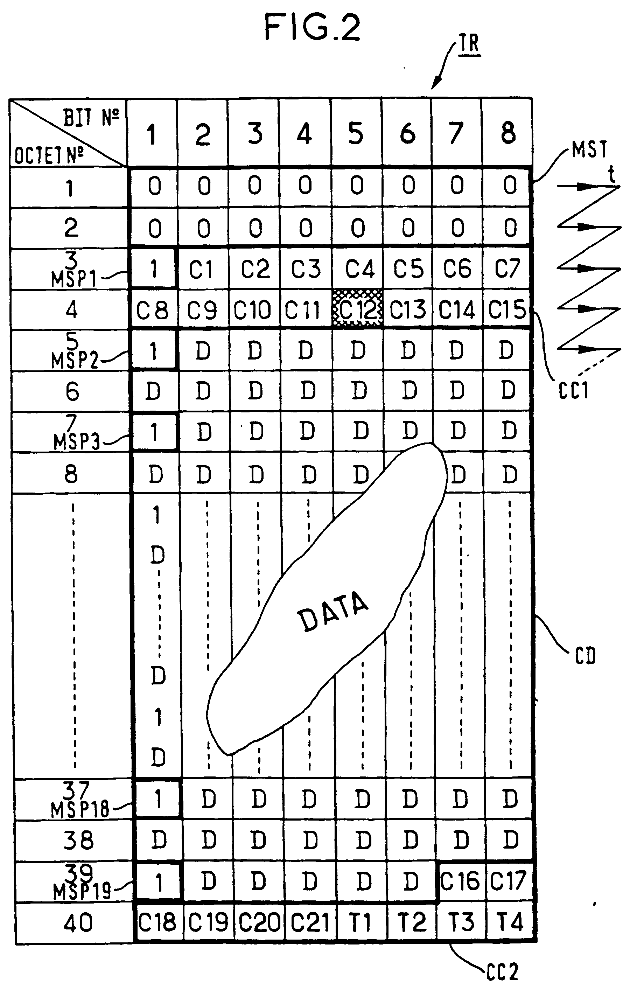

La figure 1 schématise une chaîne de transmission dans l'architecture du réseau mobile GSM. Elle comprend en cascade un commutateur du service mobile MSC, un transcodeur 1, un contrôleur de station de base 2, deux stations de base 30 et 31, et des mobiles 4. Le transcodeur 1 est connecté au contrôleur 2 à travers une liaison 2a et le contrôleur 2 est relié aux deux stations de base 30 et 31 à travers deux liaisons respectives 30a et 31a. Le transcodeur 1 assure, comme précisé précédemment, le traitement des canaux de données, telles que parole, à 64 kbit/s en des canaux à 13 kbit/s, et inversement. Il reçoit en provenance et transmet à destination du Réseau Téléphonique Commuté, à travers le commutateur du service mobile MSC, des canaux de données multiplexées à 64 kbit/s qui sont véhiculés par une liaison de transmission la. En outre, il transmet à destination et reçoit en provenance des stations de base 30 et 31, à travers le contrôleur de station de base 2, des trames TR à 16 kbit/s.
Dans une trame TR, les données utiles, telles que signal de parole d'une communication établie avec un mobile 4, définissent un débit de 13 kbit/s sur le débit total de 16 kbit/s dans la trame, les 3 kbit/s restants étant alloués à la transmission d'éléments de synchronisation et de contrôle entre station de base 30, 31 et transcodeur 1.
Dans le sens montant, c'est-à-dire du mobile 4 vers le Réseau Téléphonique Commuté, ces trames TR, dites trames montantes, sont produites par une station de base 30 ou 31 à partir des données de parole à 13 kbit/s reçues en provenance d'un mobile. La station de base 30 ou 31 assure l'insertion des éléments de synchronisation et de contrôle représentant 3 kbit/s, pour former chaque trame montante TR à 16 kbit/s à partir des données de parole représentant 13 kbit/s. Ces trames montantes TR sont reçues par le
transcodeur 1 qui soustrait les éléments de synchronisation et de contrôle insérés par la station de base 30, 31, et traite le signal de parole résultant à 13 kbit/s en un signal à 64 kbit/s transmis vers le Réseau Téléphonique Commuté.
Dans le sens descendant, du réseau téléphonique commuté vers un mobile 4, le transcodeur 1 assure l'insertion des éléments de synchronisation et de contrôle pour former des trames, dites descendantes, à 16 kbit/s à partir du flux de données utiles à 13 kbit/s. Ce flux résulte du traitement par le transcodeur 1 d'un signal de parole à 64 kbit/s reçu du Réseau Téléphonique Commuté. Ces trames descendantes TR sont reçues par la station de base 30, 31 concernée qui soustrait les éléments de synchronisation et de contrôle insérés par le transcodeur 1, et diffuse à travers une antenne 30b, 31b seulement les données de parole dans un canal de communication établi avec le mobile 4.
Pour une description de la chaîne de transmission schématisée sur la figure 1, on pourra aussi se référer par exemple au document suivant MOULY ET AL. 'The GSM System for Mobile Communications' 1992, EUROPE MEDIA, LASSAY-LES-CHATEAUX FR.
Comme montré dans la figure 2, chaque trame montante TR transmise d'une station de base, 30 ou 31, vers le transcodeur 1 comprend (8x40)=320 bits définissant 20 ms de parole. Comme spécifié par l'ETSI dans la Recommandation GSM-08.60 (European Digital Cellular Telecommunications System/Inband Control of Remote Transcoders and Rate Adaptators, Octobre 1993), la trame montante comprend, d'une part, une zone d'informations utiles sous la forme d'un premier champ de contrôle CC1, plusieurs champs de données CD et un second champ de contrôle CC2 et , d'autre part, un motif de synchronisation de trame MST et 19 motifs de synchronisation périodiques MSP1 à MSP19 séparant deux champs de données successifs.
La ligne supérieure et la colonne de gauche dans le tableau de la figure 2 repèrent, pour un bit donné dans la trame, le rang, variant de 1 à 40, de l'octet incluant ce bit et le rang dudit bit dans cet octet.

Le motif de synchronisation de trame MST occupe les deux premiers octets, de rangs 1 et 2, de la trame TR et est constitué de (2x8)= 16 bits à l'état "O", dit premier état. Les motifs de synchronisation périodiques MSP1 à MSP19 sont chacun constitués d'un bit à l'état "1", dit second état, et occupent chacun un premier bit respectif d'un octet de rang impair dans la trame, à compter du rang 3. Ainsi le motif de synchronisation MSP1 occupe le premier bit de l'octet de rang 3, le motif de synchronisation MSP2 occupe le premier bit de l'octet de rang 5, et ainsi de suite par récurrence jusqu'au motif de synchronisation MSP19 qui occupe le premier bit de l'octet de rang 39. Le champ de contrôle CC1 comprend 15 bits C1 à C15 et occupe les troisième et quatrième octets de la trame TR, exception faite du premier bit du troisième octet, ou octet de rang 3, véhiculant le motif MSP1.
Le champ de contrôle CC2 comprend 6 bits C16 à C21 et occupe pour sa part les deux derniers bits de l'octet de rang 39 et les quatre premiers bits de l'octet de rang 40. Les bits contenus dans les champs de contrôle CC1 et CC2 définissent notamment le type de trame (parole), le type de canal (débit..), ainsi que des informations d'alignement temporel, ...etc.

Dans le cadre de l'invention, notre attention sera portée sur le bit de contrôle C12 véhiculé dans un sous-champ du champ de contrôle CC1, et repéré en zone hachurée dans ce champ CC1. Ce bit est représentatif selon la technique antérieure d'une indication de mauvaise trame (Bad Frame Indication en terminologie anglo-saxonne), c'est à dire de la validité des données DATA, notée D, transmises dans les champs de données CD.
Dans une trame montante TR, une station de base 30 ou 31 positionne ce bit C12 à l'état "1", respectivement "0", pour signaler au transcodeur 1 que ladite trame TR véhiculant ce bit C12 est une trame mauvaise, respectivement bonne. Le transcodeur 1 inclut des moyens pour mettre en oeuvre un traitement particulier lorsque la trame montante TR est signalée mauvaise, en évitant ainsi de générer un signal de parole erroné durant 20 ms qui serait transmis à un débit de 64 kbit/s vers le Réseau Téléphonique Commuté. Ce bit C12 est inséré dans la trame montante TR par une unité de codage-décodage de canal (CCU en terminologie anglo-saxonne pour Channel Codec Unit) incluse dans la station de base 30 ou 31 ayant produit la trame.
En revenant à la figure 1, lors d'un changement de cellule, ou hand-over, interne opéré en réponse au franchissement par un mobile 4 d'une frontière fictive B séparant deux cellules auxquelles sont respectivement associées les deux stations de base 30 et 31, il apparaît que le positionnement selon la technique antérieure du bit C12 d'indication de mauvaise trame n'est pas optimal et entraîne un risque de mauvaise interprétation des bits de données par le transcodeur 1. Pour expliquer cela, il est supposé par exemple que, préalablement à ce changement de cellule, le mobile 4 est connecté à la station de base 30 qui produit les trames montantes TR à destination du transcodeur 1, et que suite au changement de cellule, le mobile 4 est connecté à la station de base 31 qui produit à son tour les trames montantes, relatives à la communication établie avec le mobile, à destination du transcodeur 1. La station de base 30, dite source, et la station de base 31, dite cible, ne sont pas synchronisées fréquentiellement et temporellement entr'elles relativement aux trames émises. Au cours d'un changement de cellule, le transcodeur 1 reçoit donc une portion de première trame TR émise par la station de base source 30 et une portion de seconde trame TR émise par la station de base cible 31. Si le hand-over se produit postérieurement au motif de synchronisation MST et antérieurement au bit C12, relativement à la première trame en cours d'émission par la station de base source 30, il y a une forte probabilité qu'un bit de la seconde trame émis par la station de base cible 31, et interprété par le transcodeur 1 comme le bit C12 de la première trame, prenne un état "0" signalant de ce fait au transcodeur 1 que la trame reçue est bonne, alors qu'elle est mauvaise. Par contre le bit C12 transmis par la station de base source 30 et signalant une mauvaise trame n'est pas reçue par le transcodeur 1.
Ainsi, selon la technique antérieure, la structure de trame montante définie à l'interface transcodeur-station de base n'apparaît pas optimale eu égard à un hand-over interne entre deux stations de base utilisant un même transcodeur. Il peut en effet résulter de cette structure de trame lors d'un hand-over, qu'une trame est signalée bonne au transcodeur alors qu'elle est mauvaise.

L'invention vise à remédier à l'inconvénient précité en fournissant une trame montante à l'interface station de base-transcodeur rendant sensiblement impossible une telle mauvaise interprétation par le transcodeur de l'information de mauvaise trame.

A cette fin, une trame selon l'invention comprenant un zone d'informations sous la forme d'au moins un champ de données et au moins un champ de contrôle, ledit au moins un champ de contrôle incluant un sous-champ représentatif de la validité des données transmises dans ledit au moins un champ de données, est caractérisée en ce que le rang du premier bit dudit sous champ à l'intérieur dudit au moins un champ de contrôle est inférieur à 12, le nombre de bits dudit sous champ étant supérieur ou égal à 1.
De préférence, la zone d'informations est précédée dans la trame par un motif de synchronisation de trame.
En outre, il peut être prévue une pluralité de motifs synchronisation apparaissant périodiquement dans la trame.
Selon une première variante se basant sur la Recommandation précitée GSM-08.60, le sous-champ représentatif de la validité des données transmises dans ledit au moins un champ de données est sous la forme d'un bit unique prenant l'un de deux états, et ledit bit est le premier bit de ladite zone d'informations.
Selon une seconde variante, le sous-champ représentatif de la validité des données transmises dans ledit au moins un champ de données est constitué des N premiers bits de ladite zone d'informations, et deux combinaisons prédéterminées respectives d'états desdits N premiers bits indiquent la validité et le défaut de validité des données transmises dans ledit au moins un champ de données.
Typiquement, la trame est une trame montante transmise d'une station de base vers un transcodeur dans un réseau cellulaire de radiocommunications avec des mobiles.
L'invention fournit également un émetteur. Selon la revendication 7 et un récepteur selon la revendication 8.

D'autres caractéristiques et avantages de la présente invention apparaîtront plus clairement à la lecture de la description suivante, en référence aux dessins annexés correspondants, dans lesquels :
- la figure 1, déjà commentée, schématise une chaîne de transmission élémentaire dans l'architecture d'un réseau cellulaire de radiocommunications avec des mobiles;
- la figure 2, également déjà commentée, est une structure de trame définie selon la technique antérieure à l'interface transcodeur-station de base dans le réseau cellulaire de la figure 1;
- la figure 3 illustre deux portions respectives de première et seconde trames, telles que reçues par un transcodeur selon la technique antérieure au cours d'un hand-over pour expliquer l'erreur de synchronisation qui peut résulter de la structure de trame de la figure 2; et
- la figure 4 représente une portion corrigée selon l'invention de la trame montrée à la figure 2.

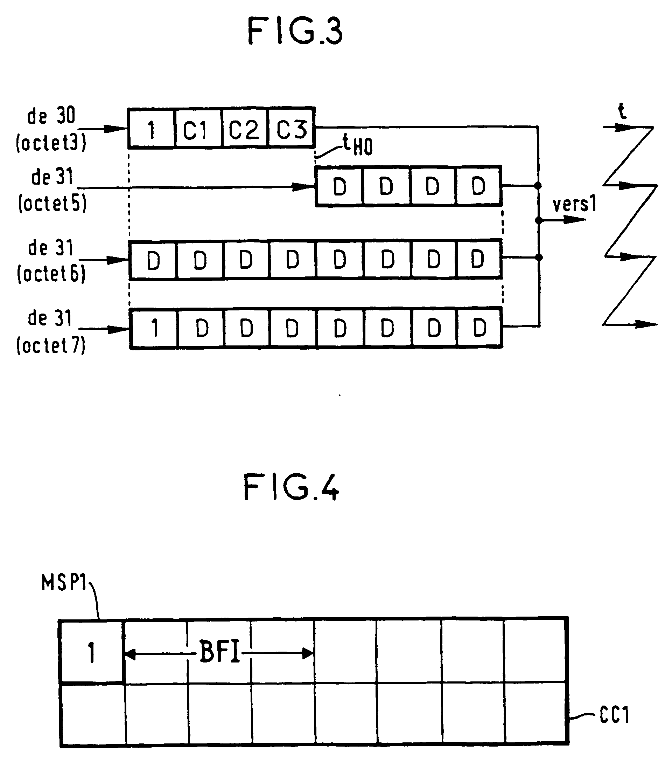

Afin de rester cohérent avec les conventions temporelles choisies dans la figure 2, qui est relative à une structure de trame, la figure 3 se lit de la manière suivante. La variable temps croît de la gauche vers la droite et du haut vers le bas comme montré par le repère t à droite de cette figure 3. Ce diagramme temporel de la figure 3 illustre des bits successifs reçus selon la technique antérieure par un transcodeur 1 avant et après un hand-over supposé s'exécuter à l'instant t_{HO}. Les stations de base source et cible impliquées dans le hand-over sont respectivement les stations 30 et 31. Lors de quatre premiers temps-bits successifs, le transcodeur 1 reçoit les quatre premiers bits 1, C1, C2 et C3 de l'octet de rang 3 d'une première trame montante TR (figure 2) transmise par la station de base source 30. Le hand-over se produit à l'instant t_{HO} puis, sans discontinuité, le transcodeur 1 reçoit les quatre derniers bits de l'octet de rang 5 d'une seconde trame montante TR transmise par la station de base cible 31, ainsi que les octets suivants de rang 6, 7, ...etc de cette même seconde trame.
En supposant que le cinquième bit D de l'octet de rang 6 transmis dans la seconde trame ait un état "0", le transcodeur 1 perçoit ce bit D="0" comme un bit d'indication de bonne trame C12 de la première trame, puisqu'il ne détecte pas la transition de la première trame transmise par la station de base source à la seconde trame transmise par la station cible. En outre, dans cette configuration volontairement choisie extrême pour expliquer l'erreur de synchronisation que fait le transcodeur 1, les motifs de synchronisation périodiques MSP3 à MSP19 transmis dans la seconde trame coïncident avec ceux attendus par le transcodeur 1 relativement à la première trame, et ce dernier ne détecte pas une perte de synchronisation sur la base de ces motifs de synchronisation MSP. La perte de synchronisation ne sera détectée par le transcodeur 1 que lors d'une émission par la station de base cible 31 d'un motif de synchronisation de trame MST ultérieur.
Afin de remédier à cela, l'invention fournit une structure de trame du type montré à la figure 2, et comprenant donc, d'une part, une zone d'informations utiles sous la forme d'un premier champ de contrôle CC1, des champs de données CD et un second champ de contrôle CC2 et, d'autre part, un motif de synchronisation de trame MST et 19 motifs de synchronisation périodiques MSP1 à MSP19, et dans laquelle trame, l'invention propose de positionner un sous-champ véhiculant l'indication de mauvaise trame BFI sensiblement au début du champ de contrôle CC1, c'est à dire au début de la zone d'informations utiles, comme cela est montré dans la figure 4. Selon une première variante, ce sous-champ peut consister en les N premiers bits de la zone d'informations. A titre d'exemple, N=3 et deux combinaisons d'états pris par ces trois bits, telles que "111" et "000", portent respectivement une indication de validité des données transmises dans la trame et une indication de défaut de validité de ces données, toutes les autres combinaisons d'états de ces N=3 bits formant des mots de contrôle ayant chacun une signification autre, telle que -plein débit- pour "010 et -demi débit- pour "011". En pratique, le nombre de combinaisons d'états portant une indication de validité ou de défaut de validité des données transmises dans la trame peut être supérieur à 1. Selon une seconde variante, ce sous-champ BFI consiste en le premier bit de la zone d'informations, auquel cas il véhicule l'information binaire transmise selon la technique antérieure dans le bit C12. En outre, l'homme du métier conviendra que l'invention n'est pas limitée strictement à la structure de trame montrée à la figure 2. La trame peut en effet ne pas contenir de motifs de synchronisation périodiques MSP et/ou de motif de synchronisation de trame MST, sans sortir du cadre de l'invention.
Selon l'invention, le sous-champ d'indication de mauvaise trame BFI étant positionné sensiblement au début de la trame, ou au début de la zone d'informations utiles si cette trame comprend des motifs de synchronisation de trame MST et/ou de synchronisation périodiques MSP, la probabilité qu'un hand-over se produise entre la fin du motif MST et le début du sous-champ BFI est quasi nulle. En effet, dans le cas par exemple de la structure de trame montrée à la figure 2 et avec modification de cette trame selon la figure 4, les deux alternatives les plus probables suivantes peuvent se produire:
ou bien le transcodeur 1 reçoit, préalablement au hand-over, dans la première trame transmise par la station source, le contenu du sous-champ BFI lui signalant une trame mauvaise,
ou bien ledit transcodeur 1 reçoit, postérieurement au hand-over, au moins un bit à l'état "1" dans la seconde trame transmise par la station de base cible qui coïncide avec une bit de synchronisation de trame MST dans la première trame, et auquel cas le transcodeur 1 détecte une perte de synchronisation.
La seule alternative pouvant causer une erreur de synchronisation dans le transcodeur 1 consiste en ce que le hand-over se produise antérieurement à l'instant de début du sous-champ BFI dans la première trame et en ce que les données transmises dans la seconde trame à compter de cet instant coïncident,
d'une part, avec une partie finale du motif de synchronisation de trame MST attendue par le transcodeur 1 relativement à la première trame, et prennent donc l'état "0", et
d'autre part, avec l'information transmise dans le champ BFI de la première trame en signalant une bonne trame.

L'invention fournit également une station de base 30, 31, ou émetteur, dans un réseau de radiocommunications avec des mobiles pour produire une trame TR conforme à l'invention. La station de base comprend de manière conventionnelle des moyens pour multiplexer des champs de données CD, champs de contrôle CC1 et CC2 et motifs de synchronisation MST et MSP1 à MSP19. Il est proposé selon l'invention que les moyens pour multiplexer multiplexent le sous-champ BFI en début de la zone d'informations dans la trame TR. Est également prévu par l'invention un transcodeur, ou récepteur, destiné à recevoir une trame conforme à l'invention. Le transcodeur comprend de manière conventionnelle des moyens pour démultiplexer des champs de données CD, champs de contrôle CC1 et CC2 et motifs de synchronisation MST et MSP1 à MSP19. Il est proposé selon l'invention que les moyens pour démultiplexer dans le transcodeur démultiplexent le sous-champ BFI en début de la zone d'informations dans la trame TR.
Bien que la description qui précède se soit limitée à une trame montante, seule à véhiculer selon la Recommandation GSM-08.60 une indication de mauvaise trame, il apparaîtra évident à l'homme du métier que la trame selon l'invention peut être une trame descendante dans un réseau mobile qui supporte une telle indication dans une trame descendante. Dans ce cas, et relativement à l'architecture de réseau GSM, le transcodeur est un émetteur de chaque trame descendante et la station de base est un récepteur de ladite chaque trame descendante.
Bien que dans la description qui précède, le sous-champ BFI est supposé occupé le(s) premier(s) bit(s) de la zone d'informations , il sera apprécié par l'homme du métier que ce sous-champ BFI peut occuper un (des) bit(s) de rang(s) supérieur(s) dans le cas où les premiers bits de la zone d'informations sont alloués à d'autres mots de contrôle. Selon l'invention, le rang du premier bit du champ BFI est néanmoins inférieur à 12. Dans ce cas, la probabilité qu'un hand-over se produise entre la fin du motif MST et le début du sous-champ BFI n'est pas nulle mais sensiblement réduite comparativement à la technique antérieure.

## Revendications

1. Trame (TR) comprenant une zone d'informations sous la forme d'au moins un champ de données (CD) et au moins un champ de contrôle (CC1, CC2), ledit au moins un champ de contrôle (CC1, CC2) incluant un sous-champ (C12, BFI) représentatif de la validité des données (DATA) transmises dans ledit au moins un champ de données (CD), **caractérisée en ce que** le rang du premier bit dudit sous-champ (C12, BFI) à l'intérieur dudit au moins un champ de contrôle est inférieur à 12, le nombre de bits dudit sous-champ étant supérieur ou égal à 1.

2. Trame conforme à la revendication 1, **caractérisée en ce que** ladite zone d'informations (CC1, CD, CC2) est précédée dans la trame (TR) par un motif de synchronisation de trame (MST).

3. Trame conforme à la revendication 1 ou 2, **caractérisée en ce qu'**elle comprend, en outre, une pluralité de motifs de synchronisation (MSP1-MSP19) apparaissant périodiquement dans la trame.

4. Trame conforme à l'une quelconque des revendications 1 à 3, **caractérisée en ce que** ledit sous-champ (C12, BFI) représentatif de la validité des données (DATA) transmises dans ledit au moins un champ de données (CD) est sous la forme d'un bit unique prenant l'un de deux états ("0", "1"), et ledit bit est le premier bit de ladite zone d'informations (CC1, CD, CC2).

5. Trame conforme à l'une quelconque des revendications 1 à 3, **caractérisée en ce que** ledit sous-champ (C12, BFI) représentatif de la validité des données (DATA) transmises dans ledit au moins un champ de données (CD) est constitué des N premiers bits de ladite zone d'informations, et au moins deux combinaisons prédéterminées respectives d'états ("0", "1") desdits N premiers bits indiquent la validité et le défaut de validité des données (DATA) transmises dans ledit au moins un champ de données (CD).

6. Trame conforme à l'une quelconque des revendications précédentes, **caractérisée en ce que** ladite trame est une trame montante transmise d'une station de base (30, 31) vers un transcodeur (1) dans un réseau cellulaire de radiocommunications avec des mobiles.

7. Emetteur (30, 31) dans un réseau de radiocommunications avec des mobiles pour produire une trame (TR) conforme à l'une quelconque des revendications précédentes, ledit émetteur comprenant des moyens pour multiplexer lesdits au moins un champ de données (CD) et au moins un champ de contrôle (CC1, CC2), lesdits moyens pour multiplexer multiplexaent ledit sous-champ (C12, BFI) en début de ladite trame (TR) de manière que le rang du premier bit dudit sous-champ (C12, BFI) à l'intérieur dudit au moins un champ de contrôle soit inférieur à 12, le nombre de bits dudit sous-champ étant supérieur ou égal à 1.

8. Récepteur (1) dans un réseau de radiocommunications avec des mobiles pour recevoir une trame (TR) conforme à l'une quelconque des revendications 1 à 6, ledit récepteur comprenant des moyens pour démultiplexer lesdits au moins un champ de données (CD) et au moins un champ de contrôle (CC1, CC2), lesdits moyens pour démultiplexer démultiplexaent ledit sous-champ (C12, BFI) en début de ladite trame (TR) de manière que le rang du premier bit dudit sous-champ (C12, BFI) à l'intérieur dudit au moins un champ de contrôle soit inférieur à 12, le nombre de bits dudit sous-champ étant supérieur ou égal à 1.

## Patentansprüche

1. Rahmen (TR) mit einem Informationsbereich in Form von mindestens einem Datenfeld (CD) und mindestens einem Steuerungsfeld (CC1, CC2), wobei dieses mindestens eine Steuerungsfeld (CC1, CC2) ein Unterfeld (C12, BFI) einschließt, das für die Gültigkeit der Daten (DATA) steht, die in diesem mindestens einem Datenfeld (CD) übertragen werden, **dadurch gekennzeichnet, dass** die Rangzahl des ersten Bits in dem bezeichneten Unterfeld (C12, BFI) innerhalb des mindestens einen Steuerungsfelds unter 12 beträgt, wobei die Bitanzahl dieses Unterfelds größer oder gleich 1 ist.

2. Rahmen gemäß Anspruch 1, **dadurch gekennzeichnet, dass** dem bezeichneten Informationsbereich (CC1, CD, CC2) im Rahmen (TR) ein Rahmensynchronisierungsmuster (MST) vorangeht.

3. Rahmen gemäß Anspruch 1 oder 2, **dadurch gekennzeichnet, dass** er außerdem eine Vielzahl von Synchronisierungsmustem (MSP1-MSP19) beinhaltet, die regelmäßig im Rahmen erscheinen.

4. Rahmen gemäß einem der Ansprüche 1 bis 3, **dadurch gekennzeichnet, dass** das bezeichnete Unterfeld (C12, BFI), das für die Gültigkeit der Daten (DATA) steht, die in diesem mindestens einen Datenfeld (CD) übertragen werden, in Form eines einzigen Bits vorliegt, das einen der beiden Status ("0", "1") annimmt, und dieses Bit das erste Bit des bezeichneten Informationsbereichs (CC1, CD, CC2) ist.

5. Rahmen gemäß einem der Ansprüche 1 bis 3, **dadurch gekennzeichnet, dass** das bezeichnete Unterfeld (C12, BFI), das für die Gültigkeit der Daten (DATA) steht, die in diesem mindestens einen Datenfeld (CD) übertragen werden, aus den N ersten Bits dieses Informationsbereichs besteht, und mindestens zwei festgelegte Statuskombinationen ("0", "1") dieser N ersten Bits die Gültigkeit und die fehlende Gültigkeit der Daten (DATA) angeben, die in diesem mindestens einen Datenfeld (CD) übertragen werden.

6. Rahmen gemäß einem der vorstehenden Ansprüche, **dadurch gekennzeichnet, dass** es sich bei diesem Rahmen um einen Aufwärtsrahmen handelt, der von einer Basisstation (30, 31) an einen Codeumsetzer (1) in einem mobilen zellularen Funkübertragungsnetzwerk übertragen wird.

7. Sender (30, 31) in einem mobilen Funkübertragungsnetzwerk zur Erzeugung eines Rahmens (TR) gemäß einem der vorstehenden Ansprüche, wobei dieser Sender Mittel zum Multiplexen dieses mindestens einen Datenfelds (CD) und mindestens einen Steuerungsfelds (CC1, CC2) enthält, diese Mittel zum Multiplexen dieses Unterfeld (C12, BFI) am Anfang dieses Rahmens (TR) so multiplexen, dass die Rangzahl des ersten Bits dieses Unterfelds (C12, BFI) innerhalb dieses mindestens einen Steuerungsfeldes unter 12 liegt, die Bitanzahl dieses Unterfelds größer oder gleich 1 ist.

8. Empfänger (1) in einem mobilen Funkübertragungsnetzwerk zum Empfangen eines Rahmens (TR) gemäß einem der Ansprüche 1 bis 6, wobei dieser Empfänger Mittel zum Demultiplexieren des mindestens einen Datenfelds (CD) und des mindestens einen Steuerungsfelds (CC1, CC2) enthält, und diese Mittel zum Demultiplexieren dieses Unterfeld (C12, BFI) am Anfang dieses Rahmens (TR) so demultiplexieren, dass dieses Unterfeld (C12, BFI) innerhalb dieses mindestens einen Steuerungsfeldes unter 12 liegt, die Bitanzahl dieses Unterfeldes größer oder gleich 1 ist.

## Claims

1. Frame (TR) comprising an information area in the form of at least one data field (CD) and at least one control field (CC1, CC2), said at least one control field (CC1, CC2) including a subfield (C12, BF1) representative of the validity of data (DATA) transmitted in said at least one data field (CD), **characterised in that** the rank of the first bit of said subfield (C12, BF1) in said at least one control field is less than 12, the number of bits of said subfield being greater than or equal to 1.

2. Frame according to claim 1, **characterized in that** said information area (CC1, CD, CC2) is preceded in the frame (TR) by a frame synchronization pattern (MST).

3. Frame according to claim 1 or 2 **characterized in that** it further comprises a plurality of synchronization patterns (MSP1-MSP19) appearing periodically in the frame.

4. Frame according to any one of claims 1 to 3, **characterized in that** said subfield representative of the validity of said data (DATA) transmitted in said at least one data field (CD) is in the form of a single bit taking one of two states ("0", "1") and said bit is the first bit of said information area (CC1, CD, CC2).

5. Frame according to any one of claims 1 to 3, **characterized in that** said subfield (C12, BF1) representative of the validity of the data (DATA) transmitted in said at least one data field (CD) comprises the first N bits of said information area, and at least two respective predetermined combinations of states ("0", " 1 ") of said first N bits indicate the validity or the non-validity of the data (DATA) transmitted in said at least one data field (CD).

6. Frame according to any one of the preceding claims, **characterised in that** said frame is an uplink frame transmitted from a base transceiver station (30, 31) to a transcoder rate adaptation unit (1) in a cellular mobile radio network.

7. Transmitter (30, 31) in a mobile radio network for producing a frame (TR) in accordance with any one of the preceding claims, said transmitter including means for multiplexing said at least one data field (CD) and said at least one control field (CC1, CC2) adapted to multiplex said subfield (C12, BF1) at the start of said frame (TR) so that the rank of the first bit of said subfield (C12, BF1) in said at least one control field is less than 12, the number of bits of said subfield being greater than or equal to 1.

8. Receiver (1) in a mobile radio network for receiving a frame (TR) in accordance with any one of claims 1 to 6, said receiver including means for demultiplexing said at least one data field (CD) and said at least one control field (CC1, CC2) adapted to demultiplex said subfield (C12, BF1) at the start of said frame (TR) so that the rank of the first bit of said subfield (C12, BF1) in said at least one control field is less than 12, the number of bits of said subfield being greater than or equal to 1.
